Europäisches Patentamt

European Patent Office

Office européen des brevets

(11) Publication number: **0 278 143 B1**

# (12) EUROPEAN PATENT SPECIFICATION

(45) Date of publication of patent specification: **31.07.91**

(51) Int. Cl.⁵: **G01M 11/08, G01L 1/24, G08B 21/00**

(21) Application number: **87301289.2**

(22) Date of filing: **13.02.87**

(54) Structural monitoring system using fiber optics.

(43) Date of publication of application:
**17.08.88 Bulletin 88/33**

(45) Publication of the grant of the patent:
**31.07.91 Bulletin 91/31**

(84) Designated Contracting States:
**CH DE FR GB IT LI NL**

(56) References cited:
**DE-A- 3 305 234      DE-B- 2 937 824
FR-A- 2 559 262      GB-A- 1 570 511
GB-A- 2 091 874      GB-A- 2 124 784
GB-A- 2 125 179      GB-A- 2 145 515
GB-A- 2 145 516      GB-A- 2 145 517**

(73) Proprietor: **G2 SYSTEMS CORPORATION (a California corporation)
14976 La Cumbra Drive
Pacific Pallisades California 90272(US)**

(72) Inventor: **Griffiths, Richard W.
14976 La Cumbra Drive
Pacific Palisades, California 90272(US)**

(74) Representative: **Meddle, Alan Leonard et al
FORRESTER & BOEHMERT Widenmayer-
strasse 4/I
W-8000 München 22(DE)**

## Description

This invention relates generally to structural monitoring and more particularly, to a method and apparatus for monitoring man-made or natural structures using fiber optics.

There are many man-made structures, such as pipelines, offshore platforms, buildings, bridges, dams and the like for which structural monitoring is important to verify design codes, test loadings and forewarn potential or actual failures of the structure or parts thereof. For example, it is known to place strain gauges, microphones for acoustic emissions, tilt meters using accelerometers and the like along a structure, such as a marine riser or pipeline to provide signals indicative of strains or deflections beyond normal limits.

Movements in natural objects, such as earth strata or rock formations adjacent to an earthquake fault, are more difficult to measure because of inhomogeneity. Seismic, tilt, meter or land surveying techniques are consequently employed to measure acceleration, tilting or displacement, respectively.

While the use of strain gauges or other measurement means periodically spaced along a structure will serve to aid in providing the desired strain data, only those discrete points on the structure to which the strain gauge is secured are monitored. There may be other locations on the structure sufficiently spaced from the point of attachment of the strain gauge or other sensor which will have no influence thereon and yet experience a physical movement or stress which could be significant to the safety or potential failure of the structures.

In addition, power must be supplied to such prior art sensors and data must be acquired, all of which involves cable, power and telemetry equipment, plus associated logistic and maintenance support. The cost for such a system can become excessive and reliability can become impaired because cf the number of elements involved.

Attempts have been made to overcome this difficulty by the development of structural frequency-measurement systems placed at a central point on a structure. The technique employs Fourier analysis to detect modal shifts in frequency resulting from changes in structural integrity, such as fractures in members or even loss of members. In the case of an offshore platform, however, the variations in loading on the structure, non-linearity of the foundation (piling) and inconsistency of natural excitation have precluded sufficient signal to noise ratio to render such a system feasible for identifying the location of structural changes.

German Patent Specification DE-A-3305234 discloses a fiber optics monitoring method and apparatus in which: an optical fiber is coupled continuously to a structure to be monitored to extend between spaced points on said structure so that physical movement of said structure between said spaced points will result in physical movement of said optical fiber; a light signal is passed into said optical fiber; and changes in said light signal resulting from said physical movement are detected. In this known system, the optical fiber is embedded in the structure to be monitored and changes in the light transmitted through the fiber are detected. In such a system it is not possible to determine the location of the physical movement from the change in the detected light signal.

The present invention aims to provide an improved monitoring method and system enabling the location of a structural movement to be determined from the change in the detected light signal.

Accordingly, in one aspect, the present invention provides a method of monitoring physical movement occurring at any point along a continum of points located between spaced points on a structure including the steps of: coupling an optical fiber continuously to said structure between said spaced points so that physical movement of said structure between said spaced points will result in physical movement of said optical fiber; passing a light signal into said optical fiber; which method is characterised in that: said coupling is achieved by attaching said optical fiber to a surface of said structure; detecting the light signal reflected back in said optical fiber; and determining changes in the reflected signal resulting from said physical movement and therefrom the location and magnitude of said physical movement.

In another aspect, the invention provides an apparatus for monitoring a physical movement between spaced points on a structure including: an optical fiber; coupling means for coupling said optical fiber continuously to said structure to extend from at least one of the spaced points to the other and thereby engage all points along the structure between said spaced points so that physical movement of the structure between said spaced points will result in physical movement of the optical fiber; means for passing a light signal into said optical fiber; which apparatus is characterised in that : said coupling means is adapted to attach said optical fiber to a surface of said structure; and there are provided means for detecting the light signal reflected back in said optical fiber; and means for determining changes in the reflected signal resulting from said physical movement and therefrom the location and magnitude of said physical movement.

A computerised data bank may be employed to facilitate the identification of the detected changes and to provide an alarm when these changes exceed preset levels.

In order that the invention may be more readily understood, embodiments thereof will now be described, by way of example, with reference to the accompanying drawings, in which:

Figure 1 is a cut-away perspective view of a structure in the form of a pipeline together with apparatus illustrated in block form for monitoring the structural integrity of the pipeline in accord with one embodiment of the present invention;

Figure 2 is a schematic showing partly in block form the manner in which additional optical fibers can be used in a monitoring system embodying the invention;

Figure 3 is a block diagram of a monitoring system in which data is stored in a memory;

Figure 4 illustrates the use of data obtained by means of the system of Figure 3 for monitoring structural integrity;

Figure 5 is a fragmentary perspective view of a fiber optic cable continuously attached to a pipeline similar to the showing of Figure 1 but wherein greatly increased sensitivity is realised by the manner in which the fiber optic cable is constructed.

Figure 6 is a view of the pipeline and cable of Figure 7 wherein a physical movement such as bending of the pipeline has taken place;

Figure 7 is a greatly enlarged cross-section of that portion of the cable in Figure 5 enclosed within the circular arrow 9;

Figure 8 is a greatly enlarged cross-section of that portion of the cable of Figure 6 enclosed within the circular arrow 10;

Figure 9 is a cross-section taken in the direction of the arrows 11-11 of Figure 7; and

FIGURE 10 is a plot of reflection intensity as a function of time and thus distance, useful in explaining the monitoring techniques.

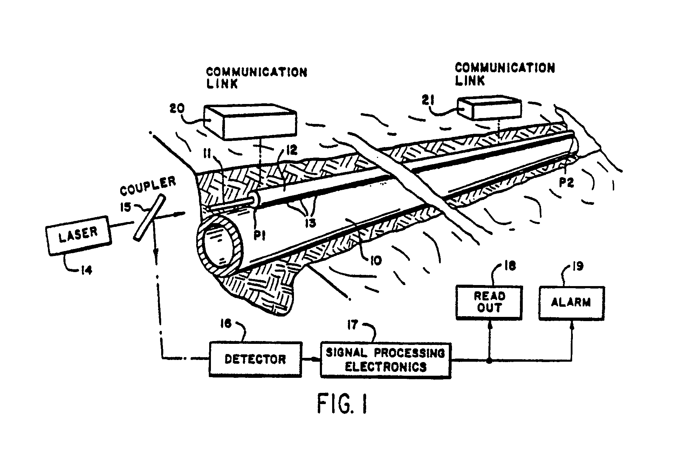

Referring first to FIGURE 1, there is shown a portion of a pipeline 10 constituting an example of a structure to be monitored. In this respect, and as mentioned heretofore, pipelines have been monitored by securing strain gauges or other sensors at periodic points along the line to detect undue strains or movements in an effort to anticipate buckling or other types of failure along the pipeline.

In accord with the present invention, the monitoring of physical movements of the structure is carried out between spaced points indicated in FIGURE 1 at P1 and P2 by means of an optical fiber 11 surrounded by a protective sheath 12 useful in attaching the optical fiber to the structure 10. The fiber extends from at least one of the spaced points such as P1 to the other such as P2. It will be understood that P1 and P2 are merely provided as convenient reference points and would normally define the end points of the lengths of the structure to be monitored.

As indicated by the numeral 13, the optical fiber sheath and therefore the optical fiber itself, is continuously attached to the structure 10 so that any physical movement of the structure will result in physical movement of the optical fiber.

Appropriate means are provided for passing a light signal into one end of the optical fiber. In FIGURE 1, this means constitutes a laser indicated by the block 14.

Also provided are means for detecting and indicating changes in the light signal provided by the laser 14. This latter detector means receives a reverse travelling wave of the light signal coupled out of the system by coupler 15 and constitutes a detector 16 and cooperating signal processing electronics indicated by the block 17. The detector 16 would normally be a photodetector arrangement. The detected changes in the signal can be read out as indicated by the block 18. By presetting given limits, an alarm 19 can be caused to sound should the detected changes exceed the preset limits.

It will be understood that any type of physical movement of the optical fiber such as slight bending will have an effect upon the reverse travelling wave of the introduced light signal along the optical fiber. Thus, various parameters can be detected, such as back-scattering sites, discontinuities, attenuation, and the like. Changes in these parameters result from the physical attachment of the optical fiber to the structure and occur as a consequence of physical movements of the pipeline structure 10.

Techniques for indicating the magnitude and location of such changes in the physical characteristics of an optical fiber per se are well known in the art. For example, United States Patent 4,243,320 discusses a method for testing optical fibers in which reflected signals produce self-coupling in a laser used to provide the original signal. This self-coupling changes the lasing activity. Any change in the lasing activity will be an indication of a change in the reflection parameter. Thus, the position of a reflected discontinuity in an optical fiber can be determined by simply monitoring the lasing activity. It is to be understood that the present invention is not directed to the specific techniques in and of themselves since the same are already known. Rather, the present invention has to do with combining an optical fiber with a structure, either man-made or natural, to enable structural integrity to be monitored by means of the optical fiber and electro-optic measurements.

Still referring to Figure 1, there is indicated by the blocks 20 and 21 a communication link at the spaced points P1 and P2. Thus, the same optical fiber used for the monitoring operation can also serve as such a communications link for transmission of voice and/or data and even signals for control of the entire system. In other words, since the optical fiber is already in place, it can additionally serve to transmit data communications industry on a time share basis.

In Figure 1, the optical fiber is shown secured along the top of the pipe structure 10. It should be understood that the optical fiber could be secured internally on the undertop wall of the pipe if desired.

The light signal provided by the laser 14 and introduced into the optical fiber can be either continuous, pulsed or even polarised or a combination can be either single or multi mode. As mentioned, the changes in reflection, back-scattering, polarisation, attenuation and scattering loss and the like of the light signal resulting from physical movement of or pressure on the optical fiber itself, as a result of the physical movements of the structure, can be detected. The magnitude and location of the physical movement or pressure-causing effect can thus be determined.

The light signal injection technique and optical fiber signature measurements are similar to those used in the manufacture and testing of optical fibers or for the assessment of field distributions along such optical fibers.

The significance of the measurements in all of the embodiments described thus far is that of change. In other words, the optical fiber signature as determined by back scattering, reflection and the like such as in the embodiment of Figure 1, are determined when the structure is in a quiescent or safe condition. It is the change in such light signature or light transmission characteristic that constitutes the significant measurement. The optical fiber itself can take any path as long as the movement permitted along that path is representative of movement of the structure to be monitored.

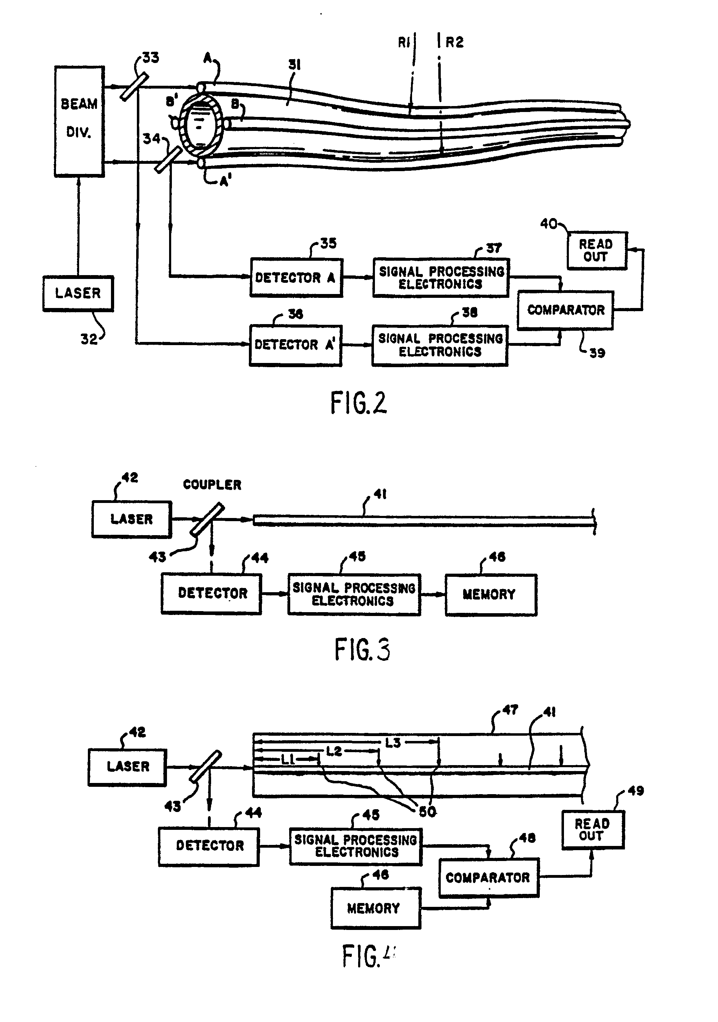

Referring now to Figure 2, there is shown a further embodiment of the present invention which will enable not only the location and magnitude of a physical movement to be measured but also the direction of such movement.

As a specific example, there is shown in FIGURE 2 a portion of a pipeline structure 31 to which four optical fibers indicated by the letters A, B, A' and B' are attached. The optical fibers in the example chosen are spaced along four quadrants on the exterior of the pipe structure 31, the pair of optical fibers, A, A' extending along the diametrically opposite top and bottom surfaces and the pair of optical fibers B and B' extending along opposite diametrical sides.

With the foregoing arrangement, and considering by way of example, the first mentioned optical fibers A and A', light is introduced into the fibers by way of a laser 32 and beam divider providing identical light beams passing into couplers 33 and 34. Back-scattering reflection characteristics are coupled out and passed into first and second detectors 35 and 36 for the respective optical fibers A and A' from which the signals are then appropriately processed in blocks 37 and 38. The output from the blocks 37 and 38 pass to a comparator 39 wherein an appropriate computation is made to determine the direction of any physical movement of the pipe affecting the two optical fibers in question. An appropriate read-out 40 will indicate such direction.

More particularly, it will be appreciated that should the pipe 31 bend as a result of losing support under a certain section thereof, the optical fiber A will experience a bending movement having a given radius of curvature R1 as indicated in FIGURE 2. Similarly, the other optical fiber A' will experience a bending as a result of the bending of the pipe structure 31 but the radius of curvature of this bending will be larger as indicated at R2. Thus, the optical fiber A at the point R1 will experience a compression while the optical fiber A' at the point R2 will experience a stretching. These changes result in changes in the light signal all as described heretofore and the changes in the light signals themselves are different in that one will indicate a compression and the other an extension. Thus, a vector or direction of the deformation as well as its magnitude and location can be computed.

Similarly, the direction of lateral movements can be determined by the second pair of optical fibers B and B' shown in FIGURE 2 by utilizing similar light introducing and detection circuits.

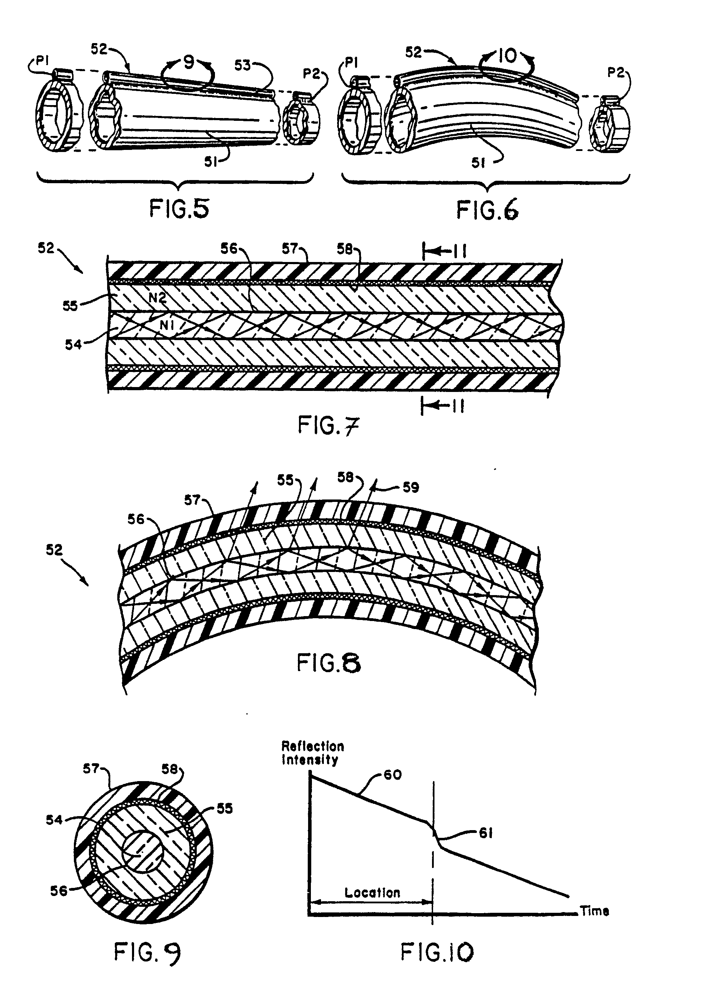

Referring now to FIGURES 3 and 4 there is shown a still further technique of structural monitoring in accord with the present invention. Considering first FIGURE 3, there is shown an optical fiber 41 into which a light signal from a laser 42 is passed through coupler 43. Reflection, back-scattering and the like from the light signal passing down the optical fiber 41 make up the optical fiber "signature" of the light signal and this "signature" is detected in the detector 44 while the optical fiber 41 is positioned in a predetermined given path or configuration free of any structure. In FIGURE 3 this particular path is illustrated as a rectilinear path or straight line.

The output from detector 44 for the light "signature" is passed into the signal processing electronics block 45 and then stored in a memory bank 46. It will now be understood that memory bank 46 includes the "light signature" for the light in the optical fiber 41 when this optical fiber follows a specific path free of any structure.

Referring now to FIGURE 4, all of the identical elements described in FIGURE 3 are reproduced except that there is now added a structure 47 to which the optical fiber 41 is secured. It is to be noted, however, that the positioning of the optical fiber on the structure 47 follows the identical path as described for the optical fiber free of the structure in FIGURE 3. As also mentioned, this predetermined path in the example chosen for illustrative purposes is a rectilinear line.

The same light source such as the laser 42 described in FIGURE 3, and same detector 44 and signal processing electronics blocks 45 are used in FIGURE 4 as shown and it will thus be understood that the light "signature" detected by the detector 44 will be identical to the light signature detected in FIGURE 3 if and only if the structure 47 exhibits no subsequent physical movements or strains that would cause a movement of the optical fiber 41 away from its predetermined path as illustrated in FIGURE 3.

The output of the signal processing electronics 45 in FIGURE 4 rather than passing into a memory passes to a comparator 48 for a comparison with the data stored in the memory bank 46 as a consequence of measurements made with the system of FIGURE 3. It will now be appreciated that any physical movement of the structure 47 resulting in a shifting of the optical fiber 41 from its predetermined path or straight line in the example chosen will give rise to a signal that is different from that stored in the memory 46. This difference will be detected by the comparator 48 and can be displayed or printed in the read-out 49.

As mentioned, it will be understood that this comparative measurement system will be used for any particular predetermined path for the optical fiber. In the particular example of FIGURES 3 and 4 wherein the path is rectilinear, the system is useful for providing immediate measurements of any positional deviations and their magnitude of the structure from a rectilinear configuration.

FIGURE 4 illustrates a further feature of the present invention which can be applied to the other embodiments described. Thus, with reference to the optical fiber 41 secured to the structure 47, it will be noted that there are provided markers 50 which are defined as predetermined types of discontinuities or interruptions in the optical fiber 41 to provide a distinctive type of reflective signal in the light signatures, known as Fresnel reflections, which can be easily detected. These "markers" are indicated as being uniformly spaced along the optical fiber 41 to demark given distances such as L1, L2 and L3. The differences in the marker characteristics are indicated by the different sized arrows 50.

With the foregoing arrangement, there will be provided definite standards in the detected reflected light signal corresponding to known distances; that is, locations along the optical fiber. These standards can thus be used to maintain the location determining accuracy of the monitoring equipment.

It will be understood that the comparison measurements described in FIGURES 3 and 4 are for those situations wherein it is desired to detect a deviation of a structure from a given configuration wherein the information for the desired configuration has previously been stored.

In the actual monitoring systems of the other embodiments, similar principles are involved in that there is always being made a comparison of output data with output data previously received either recently or at remote periods in time. In other words, and as heretofore mentioned, it is the change in the characteristics which are significant in the overall monitoring operation.

As will be evident from the foregoing description, when a physical movement is to be detected, the monitoring equipment of FIGURE 1, with pulsed light can be employed and the change in the light signal that is detected constitutes a reflected signal. The magnitude of the reflected signal is proportional to the strain introduced by the physical movement. The location or position of the strain change is determined, in turn, by the time it takes for the light signal to make a round trip from its starting point at one and of the fiber to the point of the strain change resulting from the physical movement of the structure and back to the starting point. In the embodiment described, it is the back-scattering of light resulting from light loss at the point of physical movement or strain change that is detected. Such back-scattering is known as Rayleigh reflections which appear in the form of spikes. Since the speed of light in the fiber optic is known, the distance from the one end of the fiber optic cable to the disturbance or location of the physical movement of the structure is easily computed.

The sensitivity of the fiber optic to a physical movement or strain-related deflection can be greatly increased by making use of a phenomenon known as "microbending". This phenomenon can be briefly explained as follows: Essentially, an optical fiber functions as a waveguide. It normally includes a core surrounded by a cladding of material having a different index of refraction from that of the core. Light is thus internally reflected at the interface of the core and cladding and generally precluded from escaping from the core. The light is thus essentially propagated or guided down the core.

Imperfections at any point along the cladding will result in a change in its refractive index. This change, in turn, permits some light to escape, representing loss; reflections also occur at such discontinuity and these reflections, as mentioned, are termed Rayleigh back-scattering.

By subjecting the cladding to aggravation, the aforementioned change in refractive index can be induced from a point on the surface of the cladding. This disturbance will create the same effect as imperfections and result in light loss by accentuating microbending and Rayleigh reflections.

U.S. Patent 4,421,979 to Asawa et al discloses the use of microbend transducers which include mechanical amplifiers to facilitate detections of remote structural forces. These transducers are located at discrete points on a structure. An optical fiber free of the structure is engaged periodically by the transducers so that reflections are only detectable from discrete locations.

In accord with a preferred feature of the present invention, the sensitivity of the continuous structural monitoring system is greatly increased by providing an improved optic fiber construction which, in effect provides a superior sensor cable. This cable incorporates an integral continuous of microbend elements, thereby amplifying the reflected signal from a physical movement of the structure at any point along the structure to which the fiber is attached.

All of the foregoing will be better understood by now referring to Figures 5 through 8.

In Figure 5 there is shown a pipeline 51 with fiber optic cable 52 continuously attached thereto as by cement 53 between spaced points P1 and P2. The showing is similar to Figure 1.

Figure 6 shows the cable 52 subject to a physical movement such as a bend as a reuslt of movement of a portion of the pipeline 51.

It will be understood that a light signal is passed through the cable 52 and changes detected by appropriate equipment such as shown in Figures 3 and 4.

Figure 7 shows the improved sensor cable 52 in greater detail wherein the fiber optic essentially constitutes a core 54 surrounded by cladding 55. Core 54 has a refractive index of N1 while cladding 55 has a different refractive index N2. A first light signal represented by the lines with arrows in the core of FIGURE 7 is substantially retained in the core by internal reflections from the interface 56 of the core and cladding so long as the index of refraction N2 of the cladding is not changed.

In accord with a feature of the present invention, a sheath 57 of woven fabric or the like such as Kevlar surrounds the cladding and has a coating 58 of fixed particulate material uniformly spread over its interior wall surface in intimate engagement with the outer surface of the cladding 55. This particulate material may have a representative grain size of from 5 to 23 microns. The coating 58 is similar to a sand paper and as mentioned engages the cladding continuously through out the length of the cable.

Whenever a disturbance occurs, such as a bending of the pipeline portion as depicted in FIGURE 6, a strain in the sheath 57 will induce the particulate material to distort the homogeneity of at least a portion of the cladding 55. In other words, a physical movement between the spaced points of the structure sets up a strain change in the sheath, cladding and core at a point corresponding to the location of the physical movement. In this respect, it will be understood that the spaced points P1 and P2 of FIGURES 1 and 5 could typically be several meters or even kilometers apart. The portion of the pipeline experiencing a bending or physical movement, on the other hand might be over only a short distance at any location between the points. It is over this relatively short distance that the distortion of the cladding will cause an enhanced back-scattering type reflection due to loss of light. Thus, because of the continuous attachment of the cable, any point between the spaced points that is disturbed will experience microbend reflections in the optical fiber at the same point and thereby more accurately determine the location of such point and the magnitude of the disturbance.

FIGURE 8 shows the cable section of FIGURE 7 under the bending condition shown in FIGURE 6. It will be noted that the light rays within the core may still experience some internal reflection at the interface 56 while other light rays escape such as indicated at 59. As mentioned, the loss of light is a result of the distortion of the cladding by the particulate coating 58 caused by the bending of the cable.

In FIGURES 7 and 8 the sheath 57 is the same as the protective sheath 12 referred to in FIGURE 1. In this respect, the sheath protects the cable from contaminants such as radiation, gases, moisture, etc. As mentioned, the sheath itself serves as an attachment means to the structure and thus is designed to transmit any physical movement to the optical fiber as opposed to "protecting" the fiber from such movements.

FIGURE 9 shows the cable in cross-section wherein it is clear that the particulate coating 58 completely surrounds the cladding 55.

FIGURE 10 illustrates a logarithmic plot of the measured reflected signal intensity (ordinate) as a function of time (abscissa). Since the light signal travels unit distances in unit time intervals, the time is also a function of distance. The plot shown depicts a situation where a disturbance has taken place in the structure causing bending of the optical fiber at a point between the spaced points P1 and P2 of the pipeline.

Utilizing a pulsed light signal, back-scattering or Rayleigh reflections will occur at the point of loss of light. The normal attenuation of the reflected signal in an optical fiber with increasing distance is shown at 60. At 61 there is shown a sudden loss of light resulting from a structure caused strain on the fiber as described. The distance of this loss 61 from the zero point on the plot defines the location of the structural movement and the amount of loss at 61, the magnitude.

It will be recalled with respect to FIGURE 4 that the direction of any structural movement can be determined by providing further sensor cables affixed to the structure. In addition, the rate of movement or "dynamics" of the movement can be determined by using the time response of the structure in a given direction and noting when that movement returns to its original position.

From all of the foregoing, it will now be evident that the present invention has provided an improved method and apparatus for enabling continuous monitoring of a structural member of all points between starting and end points on the structure. In other words, this system output will be continuous relative to the structure, not at discrete locations only as with strain gauges previously mentioned or other prior art systems employing microphones, tilt meters using accelerometers, discrete microbend transducers, and the like.

## Claims

1. A method of monitoring physical movement occurring at any point along a continum of points located between spaced points (P1, P2) on a structure (10 or 31 or 47 or 51) including the steps of: coupling an optical fiber (11 or 41 or 52) continuously to said structure (10 or 31 or 47 or 51) between said spaced points (P1, P2) so that physical movement of said structure between said spaced points will result in physical movement of said optical fiber; passing a light signal into said optical fiber (11 or 41 or 52); which method is characterised in that: said coupling is achieved by attaching said optical fiber (11 or 41 or 52) to a surface of said structure (10 or 31 or 47 or 51); and the method comprises the further steps of: detecting the light signal reflected back in said optical fiber (11 or 41 or 52), and determining changes in the reflected signal, resulting from said physical movement, and therefrom the location and magnitude of said physical movement.

2. A method according to claim 1, including the steps of: detecting (44, 45) and storing (46) characteristics of the light signal reflected by said optical fiber (41) when said optical fiber is positioned to follow a precise, predetermined path prior to attaching the optical fiber to said structure (47); and comparing (48) the stored characteristics with a detected change in the reflected light signal after the optical fiber (41) has been attached to said structure (47) in an identical path configuration, to thereby provide a measure of any subsequent deviation of said structure (47) from said predetermined path.

3. A method according to claim 1, including the steps of: attaching at least one additional optical fiber (A1) to said structure (31) extending along portions of said structure spaced from said first optical fiber (A); passing (34) a second light signal into said additional optical fiber (A'); detecting (36) the light signal reflected back in said second optical fiber; determining changes in reflected light signal of the second fiber; and comparing (39) changes in said first reflected light signal with changes in said second reflected light signal to thereby enable the direction of said physical movement to be determined (40).

4. An apparatus for monitoring a physical movement between spaced points (P1, P2) on a structure (10 or 31 or 47 or 51) including: an optical fiber (11 or 41 or 52); coupling means (13 or 53) for coupling said optical fiber (11 or 41 or 52) continuously to said structure (10 or 31 or 47 or 51) to extend from at least one of the spaced points (P1, P2) to the other and thereby engage all points along the structure between said spaced points so that physical movement of the structure between said spaced points will result in physical movement of the optical fiber; means (15 or 33 or 43) for passing a light signal into said optical fiber (11 or 41 or 52); which apparatus is characterised in that said coupling means (13 or 53) is adapted to attach said optical fiber (11 or 41 or 52) to a surface of said structure (10 or 31 or 47 or 51); and there are provided means (16 or 35 or 44) for detecting the light signal reflected back in said optical fiber (11 or 41 or 52), and means (17, 18, 19 or 35, 37, 39, 40 or 44, 45, 46, 48, 49) for determining changes in the reflected signal, resulting from said physical movement, and therefrom the location and magnitude of said physical movement.

5. An apparatus according to claim 4, including memory means (46) for storing the reflected light signal signature of the optical fiber (41) when the optical fiber is positioned in a predetermined path prior to coupling to the structure (47); and comparator means (48) connected to receive the output of said memory means (46) and a reflected light signal after said optical fiber (41) has been coupled to said structure (47) to follow an identical path so that a subsequent movement of said structure (47) away from said predetermined path is indicated when the reflected light signal received differs from that stored in said memory means.

6. An apparatus according to claim 4, including at least one additional optical fiber (A') for securing to said structure (31) along portions of the structure spaced from said one optical fiber (A); means (30) for passing a second light signal into said additional optical fiber (A'): means (36, 38) for detecting a second reflected light signal (A'); means for determining changes in the reflected light signal from said second fiber; and means (39) for comparing changes in said first reflected light signal (A) with changes in said second reflected light signal (A') to thereby enable the direction of said physical movement to be determined.

7. An apparatus according to any one of claims 4 to 6, in whcih said optical fiber (52) includes a core (54) and surrounding cladding (55); a sheath (57) surrounding the cladding (55); and aggravating means (58) in the form of a continuous particulate coating between said sheath (57) and cladding (55) continuously in intimate engagement with said cladding (55) for extending along the length of said optical fiber (52) between said spaced points (P1, P2) and which in use is reponsive to physical movement of the structure (51) to effect microbending in a portion of the optical fiber (52) directly engaging the structure (51) between said spaced points (P1, P2) to thereby enhance said change in said reflected light signal.

8. An apparatus according to claim 7, in which said aggravating means (58) comprises a roughened surface simulating sand paper.

9. An apparatus according to any one of claims 4 to 6, in which said optical fiber includes a core (54) and surrounding cladding (55) said cladding (55) having an index of refraction (N2) different from the index of refraction (N1) of said core (54), such that in use a light signal passing through said core (52) is substantially retained in the core by internal reflections from the interface of said core (54) and cladding (55) so long as the index of refraction of said cladding is not changed; a sheath (57) surrounding said cladding, said sheath having a coating (58) of fixed particulate material uniformly spread over its interior wall surface in intimate engagement with the outer surface of said cladding (55), said particulate material (58) having a diameter of from 5 to 23 microns, said particulate material (58) radially moving into and distorting the homogeneity of at least a portion of said cladding (55) whenever said sheath (57), cladding (55) and core (54) are subject to tension as a result of said physical movement of said fiber (52), the distortion resulting in a change in the index of refraction of the cladding (55) such that some light is permitted to escape from said core (54) and cladding (55) at the locations of said physical movement thereby generating Rayleigh back scattering constituting said light signal.

10. An apparatus according to any one of claims 4 to 9, which is adapted for attaching to the surface of a pipeline.

**Revendications**

1. Procédé de surveillance du mouvement physique se produisant en un point quelconque le long d'un continuum de points situés entre des points espacés (P1, P2) sur une structure (10 ou 31 ou 47 ou 51) comprenant les étapes consistant à : coupler une fibre optique (11 ou 41 ou 52) de façon continue à la structure (10 ou 31 ou 47 ou 51) entre les points espacés (P1, P2) de façon que le mouvement physique de la structure entre les points espacés se traduise par un mouvement physique de la fibre optique ; faire passer un signal lumineux dans la fibre optique (11 ou 41 ou 52) ; lequel procédé est caractérisé en ce que ce couplage s'effectue en fixant la fibre optique (11 ou 41 ou 52) sur une surface de la structure (10 ou 31 ou 47 ou 51) ; et le procédé comprend les étapes supplémentaires consistant à : détecter le signal lumineux réfléchi en retour dans la fibre optique (11 ou 41 ou 52) et à déterminer les modifications dans le signal réfléchi et à partir de là, la position et la grandeur du mouvement physique.

2. Procédé selon la revendication 1, comprenant les étapes consistant à : détecter (44, 45) et mémoriser (46) les caractéristiques du signal lumineux réfléchi par la fibre optique (41) lorsque la fibre optique est positionnée de façon à suivre une trajectoire précise prédéterminée avant de fixer la fibre optique sur la structure (47) ; et à comparer (48) les caractéristiques mémorisées avec une modification détectée dans le signal lumineux réfléchi après avoir fixé la fibre optique (41) sur la structure (47) dans une configuration de trajectoire identique, pour fournir ainsi une mesure de tout écart subséquent de la structure (47) par rapport à la trajectoire prédéterminée.

3. Procédé selon la revendication 1, comprenant les étapes consistant à : fixer au moins une fibre optique supplémentaire (A1) sur la structure (31) s'étendant le long des portions de la structure espacées par rapport à la première fibre optique (A) ; faire passer (34) un second signal lumineux dans la fibre optique supplémentaire (A') ; détecter (36) le signal lumineux réfléchi en retour dans la seconde fibre optique ; déterminer les modifications dans le signal lumineux réfléchi de la seconde fibre ; et comparer (39) les modifications du premier signal lumineux réfléchi avec les modifications du second signal lumineux réfléchi pour permettre ainsi de déterminer la direction du mouvement physique (40).

4. Appareil destiné à surveiller un mouvement physique entre des points espacés (P1, P2) sur une structure (10 ou 31 ou 47 ou 51) comprenant : une fibre optique (11 ou 41 ou 52) ; des moyens de couplage (13 ou 53) destinés à coupler la fibre optique (11 ou 41 ou 52) de façon continue sur la structure (10 ou 31 ou 47 ou 51) pour s'étendre à partir d'au moins un des points espacés (P1, P2) jusqu'à l'autre point et engager ainsi tous les points le long de la structure entre les points espacés de façon que le mouvement physique de la structure entre les points espacés se traduise par un mouvement physique de la fibre optique ; des moyens (15 ou 33 ou 43) destinés à faire passer un signal lumineux dans la fibre optique (11 ou 41 ou 52) ; lequel appareil est caractérisé en ce que les moyens de couplage (13 ou 53) sont aptes à fixer la fibre optique (11 ou 41 ou 52) sur une surface de la structure (10 ou 31 ou 47 ou 51) ; et en ce que sont prévus des moyens (16 ou 35 ou 44) pour détecter le signal lumineux réfléchi en retour dans la fibre optique (11 ou 41 ou 52) et des moyens (17, 18, 19 ou 35, 37, 39, 40 ou 44, 45, 46, 48, 49) pour déterminer des modifications dans le signal réfléchi résultant du mouvement physique et à partir de là, la position et la grandeur du mouvement physique.

5. Appareil selon la revendication 4, comprenant des moyens de mémoire (46) destinés à mémoriser l'indicatif du signal lumineux réfléchi de la fibre optique (41) lorsque la fibre optique est positionnée dans une trajectoire prédéterminée avant le couplage à la structure (47) ; et des moyens de comparateur (48) reliés pour recevoir la sortie des moyens de mémoire (46) et un signal lumineux réfléchi après avoir couplé la fibre optique (41) sur la structure (47) pour suivre une trajectoire identique de façon à indiquer un mouvement subséquent de la structure (47) en éloignement de la trajectoire prédéterminée lorsque le signal lumineux réfléchi reçu diffère du signal mémorisé dans les moyens de mémoire.

6. Appareil selon la revendication 4, comprenant au moins une fibre optique supplémentaire (A') pour la fixation sur la structure (31) le long de portions de la structure espacées par rapport à une fibre optique (A) ; des moyens (30) destinés à faire passer un second signal lumineux dans la fibre optique supplémentaire (A') ; des moyens (36, 38) pour détecter un second signal lumineux réfléchi (A') ; et des moyens pour déterminer les modifications dans le signal lumineux réfléchi à partir de la seconde fibre et des moyens (39) pour comparer des modifications dans le premier signal lumineux réfléchi (A) avec des modifications dans le second signal lumineux réfléchi (A') pour permettre ainsi de déterminer la direction du mouvement physique.

7. Appareil selon l'une quelconque des revendications 4 à 6, dans lequel la fibre optique (52) comprend un noyau (54) et un revêtement périphérique (55), une gaine (57) entourant le revêtement (55) ; et des moyens d'aggravation (58) sous la forme d'un enduit particulaire continu entre la gaine (57) et le revêtement (55) continuellement en contact intime avec le revêtement (55) pour s'étendre sur la longueur de la fibre optique (52) entre des points espacés (P1, P2) et qui en fonctionnement est sensible au mouvement physique de la structure (51) pour effectuer une microflexion dans une portion de la fibre optique (52) venant en contact directement avec la structure (51) entre les points espacés (P1, P2) pour rehausser la modification dans le signal lumineux réfléchi.

8. Appareil selon la revendication 7, dans lequel les moyens d'aggravation (58) sont constitués par une surface rendue rugueuse simulant du papier émeri.

9. Appareil selon l'une quelconque des revendications 4 à 6, dans lequel la fibre optique comprend un noyau (54) et un revêtement périphérique (55) lequel revêtement (55) a un indice de réfraction (N2) différent de l'indice de réfraction (N1) du noyau (57) de telle sorte qu'en fonctionnement un signal lumineux traversant le noyau (52) est sensiblement retenu dans le noyau par des réflexions internes en provenance de l'interface du noyau (54) et du revêtement (55) tant que l'indice de réfraction du revêtement n'est pas modifié ; une gaine (57) entourant le revêtement, la gaine comportant un enduit (58) d'une matière particulaire fixe étalée uniformément sur la surface de sa paroi interne en contact intime avec la surface externe du revêtement (55), la matière particulaire (58) ayant un diamètre allant de 5 à 23 microns, la matière particulaire (58) se déplaçant radialement dans et déformant l'homogénéité d'au moins une portion du revêtement (55) chaque fois que la gaine (57), le revêtement (55) et le noyau (54) sont soumis à une tension par suite d'un mouvement physique de la fibre (52), la déformation se traduisant par une modification de l'indice de réfraction du revêtement (55) de telle sorte qu'une certaine quantité de lumière peut s'échapper du noyau (54) et du revêtement (55) aux emplacements du mouvement physique produisant ainsi une diffusion en retour de Rayleigh constituant le signal lumineux.

10. Appareil selon l'une quelconque des revendications 4 à 9, qui est apte à se fixer sur la surface d'un pipeline.

**Patentansprüche**

1. Verfahren zum Überwachen räumlicher Bewegung, die an irgendeinem Punkt entlang eines Kontinuums von Punkten auftritt, die zwischen beabstandeten Punkten (P1, P2) auf einer Struktur (10 oder 31 oder 47 oder 51) angeordnet sind, welches die Schritte umfaßt: kontinuierliches Koppeln einer optischen Faser (11 oder 41 oder 52) an die Struktur (10 oder 31 oder 47 oder 51) zwischen den beabstandeten Punkten (P1, P2), so daß die räumliche Bewegung der Struktur zwischen den beabstandeten Punkten zu einer räumlichen Bewegung der optischen Faser führt; Leiten eines Lichtsignales durch die optische Faser (11 oder 41 oder 52); wobei das Verfahren dadurch gekennzeichnet ist, daß die Kopplung durch Anheften der optischen Faser (11 oder 41 oder 52) an eine Oberfläche der Struktur (10 oder 31 oder 47 oder 51) erreicht wird; wobei das Verfahren weiterhin die Schritte umfaßt: Erfassen des Lichtsignales, das in der optischen Faser (11 oder 41 oder 52) rückreflektiert wird und Bestimmen von Änderungen in dem reflektierten Signal, die von der räumlichen Bewegung herrühren, und daraus den Ort und die Größe der räumlichen Bewegung.

2. Verfahren nach Anspruch 1, welches die Schritte umfaßt: Erfassen (44, 45) und Speichern (46) von Eigenschaften des von der optischen Faser (41) reflektierten Signals, wenn die optische Faser so angeordnet ist, daß sie einem genauen vorbestimmten Weg folgt, vor dem Anheften der optischen Faser an die Struktur (47); und Vergleichen (48) der gespeicherten Eigenschaften mit einer erfaßten Änderung im reflektierten Lichtsignal, nachdem die optische Faser (41) an die Struktur (47) in einer identischen Wegkonfiguration angeheftet ist, so daß damit eine Messung jeder nachfolgenden Abweichung der Struktur (47) vom festgelegten Weg zur Verfügung steht.

3. Verfahren nach Anspruch 1, welches die Schritte umfaßt: Anheften wenigstens einer zusätzlichen optischen Faser (A1) an die Struktur (31), die sich entlang von Anschnitten der Struktur erstreckt, beabstandet von der ersten optischen Faser (A); Leiten (34) eines zweiten Lichtsignales durch die zusätzliche optische Faser (A'); Erfassen (36) des Lichtsignales, das in der zweiten optischen Faser rückreflektiert worden ist; Bestimmen von Änderungen in dem reflektierten Lichtsignal der zweiten Faser; und Vergleichen (39) von Änderungen in dem ersten reflektierten Lichtsignal mit Änderungen in dem zweiten reflektierten Lichtsignal, so daß es möglich ist, die Richtung der räumlichen Bewegung zu bestimmen (40).

4. Vorrichtung zum Überwachen einer räumlichen Bewegung zwischen beabstandeten Punkten (P1, P2) auf einer Struktur (10 oder 31 oder 47 oder 51), mit: einer optischen Faser (11 oder 41 oder 52); einer Kopplungseinrichtung (13 oder 53) zum kontinuierlichen Koppeln der optischen Faser (11 oder 41 oder 52) an die Struktur (10 oder 31 oder 47 oder 51), so daß sie sich wenigstens von einem der beabstandeten Punkte (P1, P2) zu dem anderen erstreckt und dabei alle Punkte entlang der Struktur zwischen den beabstandeten Punkten berührt, so daß die räumliche Bewegung der Struktur zwischen den beabstandeten Punkten zu einer räumlichen Bewegung der optischen Faser führt; Einrichtungen (15 oder 33 oder 43) zum Leiten eines Lichtstrahles in die optische Faser (11 oder 41 oder 52); wobei die Vorrichtung dadurch gekennzeichnet ist, daß die Kopplungseinrichtung (13 oder 53) so ausgelegt ist, daß sie die optische Faser (11 oder 41 oder 52) an eine Oberfläche der Struktur (10 oder 31 oder 47 oder 51) heftet; und daß Einrichtungen (16 oder 35 oder 44) zum Erfassen des in der optischen Faser (11 oder 41 oder 52) rückreflektierten Lichtsignales und Einrichtungen (17, 18, 19 oder 35, 37, 39, 40 oder 44, 45, 46, 48, 49) zum Bestimmen von Änderungen in dem reflektierten Signal, das von der räumlichen Bewegung herrührt, und daraus des Ortes und der Größe der räumlichen Bewegung zur Verfügung gestellt sind.

5. Vorrichtung nach Anspruch 4, mit einer Speichereinrichtung (46) zum Speichern der Kennzeichnung des reflektierten Lichtsignales der optischen Faser (41), wenn die optische Faser vor dem Koppeln an die Struktur (47) in einem festgelegten Weg angeordnet ist; und einer Vergleichseinrichtung (48), die so geschaltet ist, daß sie den Ausgang der Speichereinrichtung (46) und ein Signal des reflektierten Lichtes empfängt, nachdem die optische Faser (41) an die Struktur (47) gekoppelt ist, um einem identischen Weg zu folgen, so daß eine nachfolgende Bewegung der Struktur (47) entfernt vom festgelegten Weg angezeigt wird, wenn das aufgenommene reflektierte Lichtsignal von dem in der Speichereinrichtung abgelegten verschieden ist.

6. Vorrichtung nach Anspruch 4, mit wenigstens einer zusätzlichen optischen Faser (A') zum Befestigen an der Struktur (31) entlang von Abschnitten der Struktur, entfernt von der optischen Faser (A), einer Einrichtung (30) zum Leiten eines zweiten Lichtsignales durch die zusätzliche optische Faser (A'); Einrichtungen (36, 38) zum Erfassen eines zweiten reflektierten Lichtsignales (A'); einer Einrichtung zum Bestimmen von Änderungen im reflektierten Lichtsignal aus der zweiten Faser und einer Einrichtung (39) zum Vergleichen von Änderungen im ersten reflektierten Lichtsignal (A) mit Änderungen im zweiten reflektierten Lichtsignal (A'), so daß es möglich ist, die Richtung der räumlichen Bewegung zu bestimmen.

7. Vorrichtung nach einem der Ansprüche 4 bis 6, bei der die optische Faser (52) einen Kern (54) und eine umgebende Hülle (55), einen die Hülle (55) umgebenden Mantel (57) und eine Verstärkungseinrichtung (58) in Form eines kontinuierlichen, aus Partikeln bestehenden Überzuges zwischen dem Mantel (57) und der Hülle (55), die ununterbrochen in engem Eingriff mit der Hülle (55) ist, um sich entlang der Länge der optischen Faser (52) zwischen den beabstandeten Punkten (P1, P2) zu erstrecken, und die bei der Verwendung auf die räumliche Bewegung der Struktur (51) anspricht, um Mikrokrümmung in einem Bereich der optischen Faser (52) zu bewirken, die direkt an der Struktur (51) zwischen den beabstandeten Punkten (P1, P2) anliegt, um dadurch die Änderung im reflektierten Lichtsignal zu vergrößern umfaßt.

8. Vorrichtung nach Anspruch 7, bei der die Verstärkungseinrichtung (58) eine aufgerauhte Oberfläche, die Sandpapier simuliert aufweist.

9. Vorrichtung nach einem der Ansprüche 4 bis 6, bei der die optische Faser einen Kern (54) und eine umgebende Hülle (55), umfaßt wobei die Hülle (55) einen Brechungsindex (N2) hat, der vom Brechungsindex (N1) des Kerns (54) unterschiedlich ist, so daß bei der Verwendung ein Lichtsignal, das durch den Kern (52) läuft, im wesentlichen in dem Kern durch innere Reflektion an der Zwischenfläche von Kern (54) und Hülle (55) so lange zurückgehalten wird, wie der Brechungsindex der Hülle nicht geändert wird; einen Mantel (57), der die Hülle umgibt, wobei der Mantel einen Überzug (58) aus festem, aus Partikeln bestehenden Material aufweist, das gleichförmig über die Innenwandfläche in engem Eingriff mit der Außenfläche der Hülle (55) verteilt ist, wobei das aus Partikeln bestehende Material (58) einen Durchmesser von 5 bis 23 Mikron hat, wobei das aus Partikeln bestehende Material (58) sich radial in die Hülle (55) bewegt und die Homogenität wenigstens eines Bereichs der Hülle (55) jedesmal verzerrt, wenn der Mantel (57), die Hülle (55) und der Kern (54) einer Spannung als Folge der räumlichen Bewegung der Faser (52) ausgesetzt sind, wobei die Verzerrung zu einer Änderung des Brechungsindex der Hülle (55) führt, so daß ein Teil des Lichts aus dem Kern (54) austreten kann und die Hülle (55) an den Orten der räumlichen Bewegung Rayleigh'sche Rückstreuung erzeugt, die das Lichtsignal bildet.

10. Vorrichtung nach einem der Ansprüche 4 bis 9, die so ausgelegt ist, daß sie an die Oberfläche einer Rohrleitung geheftet werden kann.

FIG. 1

FIG.2

FIG. 3

FIG. 4

13

FIG.5

FIG.6

FIG.7

FIG.8

FIG.9

FIG.10